# EUROPEAN PATENT SPECIFICATION

(11) **EP 0 384 778 B1**
(45) Date of publication and mention of the grant of the patent: **29.12.1993**
(21) Application number: 90301968.5
(22) Date of filing: 23.02.1990
(51) Int. Cl.: H01B 13/00

(54) **Mineral insulated cable manufacture**
Herstellung von mineralisolierten Kabeln
Fabrication de câbles à isolant minéral

(30) Priority: 24.02.1989 GB 8904253; 24.04.1989 GB 8909318; 24.04.1989 GB 8909320
(43) Date of publication of application: 29.08.1990
(73) Proprietor: BICC Public Limited Company, London W1X 5FH (GB)
(72) Inventor: Simester, Ronald Alexander, Nr. Andover Hants., SP11 6HA (GB)
(74) Representative: Dlugosz, Anthony Charles

(56) References cited:
- EP-A- 0 059 971
- DE-A- 1 905 791

## Description

This invention relates to a method of, and apparatus for, manufacturing mineral insulated electric cables, that is to say cables of the kind comprising at least one elongate conductor insulated from a surrounding sheath of metal or metal alloy, and where there is more than one elongate conductor from the other conductor or conductors, by compacted mineral insulating powder, usually but not necessarily magnesium oxide.

In methods of manufacturing mineral insulated electric cables currently employed, mineral insulating powder and a conductor rod or conductor rods are simultaneously introduced into a metal tube, the powder is densely packed in the tube and around the conductor rod or rods by ramming and/or vibration, and the filled tube is then reduced in cross-sectional size, for example by causing the filled tube to pass through rolls or through a die or dies. In some cases, the metal tube is a preformed tube and, where a substantially continuous process is required, two or more preformed metal tubes are welded end-to-end during the course of the process as described and claimed in our British Patent GB-B-2 093 262. In other cases, the metal tube is continuously formed from ductile metal strip which is bent into tubular form and whose edges are continuously welded together while simultaneously introducing mineral insulating powder and a conductor rod or conductor rods into the tube so formed. In all cases, the metal tube from which the sheath of a mineral insulated cable is to be formed may be disposed substantially horizontally or withits axis inclined at any acute angle to the horizontal but it is the general practice to dispose the tube substantially vertically so that mineral insulating powder can be introduced downwardly into the tube under the influence of gravity.

In EP-A-0059971, there is described and illustrated a method of and apparatus for the production of sheathed cables and/or transducers. In this method, insulating powder and a conductor rod or rods are simultaneously continuously introduced into a metal tube from which the cable sheath is to be formed and which is itself continuously formed by transversely folding a metal strip travelling in the direction of its length and by continuously welding together abutting edges of the advancing strip. The insulating powder is injected into the metal tube from a pressure chamber filled with helium via a powder delivery tube which extends into the metal tube and the conductor rod or rods is or are fed into the powder delivery from a pressure chamber which is also filled with helium. Air is continuously evacuated from the metal tube in a manner not described or illustrated and the insulating powder is injected into the metal tube via the powder delivery tube with the aid of the pressure difference existing between the helium in the pressure chambers and the vacuum created in the metal tube.

In DE-A-1905791, there is described and illustrated a step-by-step method of manufacturing a mineral insulated cable in which a preformed metal tube, which is to constitute the cable sheath, is supported vertically and closed at its lower end. Conductor rods are sliding fits in, and are positively relatively spaced from, the metal tube by a conductor guide which is a sliding fit in the metal tube and/or which has attached at its upper end a support member which is a sliding fit in the metal tube. Mineral insulating powder is fed into a space between the conductor guide and the closed lower end of the metal tube or the upper surface of a mass of powder previously fed and compacted in the metal tube either through discrete passages in the conductor guide or through the clearance between the conductor guide and the wall of the metal tube. Air is evacuated from the space beneath the conductor guides through a filter incorporated in the conductor guide, mineral insulating powder is introduced into the evacuated space through the passages or clearance between the conductor guide and metal tube, and air entrained in the powder is evacuated through the filter to cause the powder to form a densely-compacted mass. Thereafter, relative movement is effected between the metal tube and the conductor guide to form a space between the conductor guide and the surface of the compacted mass of powder, further powder is introduced into the evacuated space through the passages or clearance between the conductor guide and the metal tube and the sequence of operating steps is repeated as necessary.

Each of the methods described in the aforesaid specifications necessitates evacuation of air from the metal tube from which the cable sheath is to be formed and, for this purpose, as is described in DE-A-1905791, the passages for the introduction of mineral insulating powder and the passages for evacuation of air from the metal tube must be discrete with respect to one another. EP-A-0059971 is silent as to how air, and helium introduced with the insulating powder, are evacuated from the metal tube. In both cases, however, a vacuum pump is required for evacuating the air, or air and helium, from the metal tube.

It is an object of the present invention to provide an improved method of, and improved apparatus for, manufacturing mineral insulated electric cable by virtue of which introduction of mineral insulating powder into, and compaction of mineral insulating powder in, the metal tube from which the cable sheath is to be formed can be more rapidly achieved than in methods of introducing and compacting mineral insulating powder hitherto proposed and used.

In the improved method according to the invention, mineral insulating powder is injected continuously into the metal tube from which the cable sheath is to be formed under the pressure of a gas via a powder delivery tube which extends into the metal tube and through which the or each conductor rod is fed continuously, so that mineral insulating powder fills the space around the conductor rod or rods within the metal tube and is partially compacted under said gaseous pressure, gas is expelled from the powder delivery tube near its downstream end in such a way that the expelled gas flows from the powder delivery tube back between the powder delivery tube and the metal tube, and mineral insulating powder is prevented or at least substantially restrained from being expelled with the gas from the powder delivery tube and from flowing from the metal tube back between the powder delivery tube and the metal tube.

The gas may be expelled from the powder delivery tube to the atmosphere or it may be expelled from the powder delivery tube via a substantially fluid-tight circulatory system to a re-claim or recycling plant.

The gas may be any gas which will have no deleterious effect on, and will not react with, the components of the mineral insulated cable under manufacture, clean dry air being preferred. Preferably, the gas is at a pressure lying in the range 0 to 6 bar gauge.

Preferably, the gas pressure under which mineral insulating powder is injected into the advancing metal tube having regard to the rate of travel of the metal tube and of the conductor rod or rods will be such that the partial compaction, i.e. fill density, of the mineral insulating powder within the metal tube before it passes to the means by which the cross-sectional size of the filled tube is reduced will lie within a predetermined range, e.g. within the range 1.5 to 3.0 g/cm³.

Preferably, partial compaction of the mineral insulating powder within the metal tube before the filled tube passes to the means by which the cross-sectional size of the filled tube is reduced is assisted by vibration of the metal tube at at least one position between the downstream end of the powder delivery tube and said reducing means. Such vibration may be effected by diametrically opposed, rectilinear vibrators but preferably such vibration is effected by one or more than one rotatably driven vibrator capable of vibrating the metal tube at a vibration rate of at least 20,000 cycles per minute.

Preferably, the mineral insulating powder being injected via the powder delivery tube into the metal tube is fed from a fluid-tight chamber which is connected to the upstream end of the powder delivery tube and into which said gas is introduced at a predetermined pressure. Turbulence of the powder in the fluid-tight chamber to relieve the weight of the powder imposed on the walls of the chamber may be effected by introducing the gas into the fluid-tight chamber under said predetermined pressure through at least one pipe which extends transversely within or around the inside of the chamber and which has in the wall of the pipe over at least a part of its length a multiplicity of mutually spaced apertures through which gas under said pressure is expelled in a plurality of directions into the chamber. Alternatively, the gas may be introduced through the wall of the chamber at a plurality of mutually spaced positions via a pipe or gallery at least partially surrounding the chamber.

The fluid-tight chamber may be automatically re-charged with mineral insulating powder when the quantity of powder in the chamber falls to a predetermined level from a supplementary fluid-tight chamber which is connected to the fluid-tight chamber via an automatically-operable valve and from which a predetermined quantity of mineral insulating powder under the pressure of the gas can be fed into the fluid-tight chamber, thereby ensuring that injection of mineral insulating powder into the metal tube is continuous. The supplementary fluid-tight chamber itself may be automatically re-charged with mineral insulating powder from a source of supply whilst the automatically-operable valve between the two fluid-tight chambers is closed and the supplementary chamber vented to a suitable pressure by a separate automatically-operable valve.

Injection of mineral insulating powder under the pressure of said gas into the powder delivery tube may be further encouraged by means of at least one screw so disposed in the fluid-tight chamber that, when it is rotatably driven about its axis, mineral insulating powder is encouraged to flow towards the outlet of the chamber.

The main and supplementary chambers, and the powder in them, may be maintained at a predetermined temperature sufficient to prevent condensation and to encourage flow of the powder. In this case, the source of gas may also be maintained at a predetermined temperature, either in conjunction with the chamber or independently thereof.

The metal tube from which the cable sheath is to be formed, and hence the powder-delivery tube, may be disposed substantially horizontally or with their axes lying at an acute angle to the horizontal or substantially vertically. Preferably, the metal tube and the powder-delivery tube over at least major parts of their lengths are disposed substantially horizontally and mineral insulating powder under the pressure of a gas is injected into the upstream end of the powder delivery-tube from the fluid-tight chamber which is mounted above and upstream of the powder delivery tube and is connected thereto by a pipe disposed in a smooth curve.

In order to reduce the risk that injection of mineral insulating powder under the pressure of said gas into the powder delivery tube may be impeded by an undesirable build up of powder at the position where the fluidised powder first comes into contact with the advancing conductor rod or rods, which powder build up will tend to restrain passage of powder along the upstream part of the powder delivery tube, preferably, at the upstream end of the powder delivery tube the delivery tube constitutes or is detachably connected to one branch of a bifurcated tubular fitting, the or each conductor rod is fed through the second branch of the bifurcated fitting into the powder delivery tube through a gland unit in the second branch effecting a substantially fluid-tight seal with the advancing rod or rods, and gas under a predetermined pressure is injected into the second branch of the bifurcated fitting through at least one inlet port in its peripheral wall and flows along said second branch into the upstream end of the powder delivery tube, thereby substantially reducing the risk of build up of powder at the intersection of said branches of the fitting.

Preferably, with a view to substantially reducing risk of leakage of powder at the upstream end of the second branch of the bifurcated fitting, the gland unit in the second branch includes an elongate plug which effects a substantially fluid-tight fit in and over a part of the length of the bore of the second branch in such a way that the plug is restrained against rotational movement with respect to the fitting and underlies the or each inlet port in the peripheral wall of the second branch, which has for the or each conductor rod at least one throughbore of such a diameter that the plug effects a substantially fluid-tight seal with the conductor rod advancing therethrough and which is made of a material that is sufficiently fluid-permeable to permit flow of gas under said predetermined pressure from the inlet port or ports through the material of the elongate plug and into the second branch and that serves as a filter preventing leakage of mineral insulating powder through the upstream end of the second branch.

As the fluid-permeable material of the elongate plug of the gland unit, it is preferred to employ a semi-rigid microporous polymeric material, such as a high density polyethylene. Especially suitable fluid-permeable materials include high density polyethylenes sold by Porvair Limited of Kings Lynn, Norfolk, England under the trade names "VYON S" and "VYON D". These particular semi-rigid micorporous polymeric materials have the advantage that they are resistant to abrasive powders and hence have good wearing properties and that they are self-lubricating. Alternatively, the elongate plug may be made of a sintered metal, such as stainless steel.

Preferably, at least one washer of compressible fluid-impermeable material is urged against the upstream end face of the elongate plug by a gland nut which is in screw threaded engagement with the upstream end of the second branch of the fitting.

Preferably, also, the elongate plug abuts a radially inwardly extending shoulder in the bore of the second branch of the fitting so that the elongate plug and/or the compressible washer can be axially compressed by tightening of the gland nut.

The powder delivery tube preferably has at or near its downstream end at least one spacer member which serves to locate the or each conductor rod positively with respect to the metal tube and which has or at least partially bounds one or more than one passage through which mineral insulating powder passes from the powder delivery tube into the metal tube.

Expulsion of gas from the powder delivery tube near its downstream end preferably is effected through at least one outlet port having an associated filter which prevents or at least substantially restrains mineral insulating powder from being expelled with the gas. The or each outlet port may be formed in the circumferential wall of the powder delivery tube near its downstream end but, to facilitate replacement or clearance of the or a filter should the filter become so clogged with mineral insulating powder that expulsion of gas through the port or ports becomes undesirably restricted, preferably the or each outlet port and its associated filter forms part of a fitting which is separately formed with respect to, and can be readily detachably secured to the downstream end of, the powder delivery tube. Preferably, also, the separately formed fitting incorporates or constitutes said spacer member or members serving to locate the or each conductor rod with respect to the metal tube. The separately formed fitting may also incorporate downstream of the outlet port or ports in the fitting filtering means for preventing or at least substantially restraining mineral insulating powder from flowing from the metal tube back between the fitting and the metal tube.

In a first preferred embodiment, the separately formed fitting comprises a sleeve having intermediate of its ends a plurality of circumferentially spaced holes and, associated with each hole, a gauze of stainless steel or other metal or metal alloy constituting a filter. Preferably, each hole in the sleeve is of an elongate shape and the sleeve is surrounded by an outer sleeve which is separately formed with respect to said first or inner sleeve and has a like plurality of circumferentially spaced holes and which can be adjustably secured with respect to the inner sleeve, the holes in the outer sleeve each being of such a shape and size having regard to the shapes and sizes of the holes in the inner sleeve that, by appropriate adjustment of the outer sleeve with respect to the inner sleeve, the cross-sectional area of each filtered outlet port constituted by the overlying holes in the sleeves can be readily adjusted such as may be necessary to accommodate mineral insulating powders of granular compositions differing from one another.

Preferably, the upstream end of the inner sleeve of the fitting is so detachably fitted to the downstream end of the powder delivery tube that the bores of the powder delivery tube and of the inner sleeve are substantially smoothly continuous.

The filtering means of the fitting of the first preferred embodiment downstream of the outlet port or ports preferably comprises a brush which is of tubular form and has a multiplicity of bristles of stainless steel or other metal or metal alloy and which is so detachably secured to the downstream end of the inner sleeve that the bristles extend lengthwise between the fitting and the metal tube with the free ends of the bristles protruding beyond the downstream end of the fitting and, detachably secured to the inner sleeve immediately upstream of the tubular brush, at least one brush which is of circular form and has a multiplicity of bristles of stainless steel or other metal or metal alloy extending radially outwardly..

The or each spacer member locating the or each conductor rod with respect to the metal tube preferably comprises a substantially rigid pin which extends diametrically within the inner sleeve of the fitting of the first preferred embodiment downstream of the holes in the inner sleeve and which may also be employed to secure the tubular brush to the inner sleeve.

In a second preferred embodiment, the separately formed fitting constitutes the spacer member serving to locate the or each conductor rod positively with respect to the metal tube and having or at least partially bounding a passage or passages through which mineral insulating powder passes from the powder delivery tube into the metal tube, which spacer member has a circumferentially continuous wall which, over at least a part of its length nearer its upstream end, is made of a material sufficiently fluid-permeable to permit expulsion of the gas therethrough and serving as a filter preventing or substantially restraining expulsion of mineral insulating powder.

As said fluid-permeable material of the fitting, it is preferred to employ the semi-rigid micro-porous polymeric material, such as a high density polyethylene, previously described.

Preferably, the upstream end of the circumferential wall of the fitting effects a tight fit over the downstream end of the powder delivery tube and, preferably also, the bore of the fitting over a part of its length may be stepped for this purpose. At its downstream end, the circumferential wall of the fitting may protrude beyond the passage or passages in the fitting through which mineral insulating powder passes from the powder delivery tube into the metal tube and the internal diameter of this protruding part of the circumferential wall of the fitting may increase smoothly in a direction towards the downstream end of the fitting.

The filtering means of the fitting of the second preferred embodiment disposed between the fitting and the metal tube preferably is a ring of resilient material, e.g. bronze-filled polytetrafluoroethylene, housed in a circumferentially continuous groove in the outer surface of the circumferential wall intermediate of the ends of the fitting and downstream of said part of the circumferential wall of said fluid-permeable material.

In each preferred embodiment, the separately formed fitting may be detachably secured to the powder delivery tube by any convenient means which can be disposed between the fitting and the surrounding metal tube. For this purpose, it is preferred to detachably secure the fitting to the downstream end of the powder delivery tube by a plurality of circumferentially spaced resilient clips, each of which is pivotally mounted on the outer surface of the fitting and is adapted to effect a snap fit over a step or shoulder on the outer surface of the powder delivery tube. This step or shoulder may be a circumferentially continuous collar welded to the outer surface of the powder delivery tube.

The improved method of introducing mineral insulating powder under the pressure of a gas into the metal tube from which the sheath of mineral insulated cable is to be formed is especially, but not exclusively, suitable for use in the known continuous process of manufacturing mineral insulated cable in which the metal tube is continuously formed by bending an advancing ductile strip into tubular form and welding the edges of the strip together. Preferably, when used in this known continuous process, the advancing ductile metal strip is folded into tubular form around and radially spaced from the powder-delivery tube, the downstream end of the powder-delivery tube being downstream of the position at which the edges of the transversely folded metal strip are welded together, and the gas expelled from the powder-delivery tube is caused to flow back between the powder-delivery tube and the surrounding folded metal strip so that the gas serves to convey heat emitted by the welding process. To this end, the powder delivery tube may have upstanding from its outer surface a plurality of circumferentially spaced, longitudinally extending continuous or discontinuous ribs which serve to space the folded metal strip from the powder delivery tube and which define, between adjacent circumferentially spaced ribs, longitudinally extending passages.

Preferably, the circumferentially spaced ribs on the outer surface of the powder delivery tube are each longitudinally continuous so that there are defined between adjacent ribs independent longitudinally continuous passages. At least one of these passages which is circumferentially remote from the vicinity of the welding station preferably is employed to carry the gas expelled from the delivery tube and preferably has at or near its upstream end a filter bag for collecting any stray powder which may be expelled with the gas from the delivery tube. In this case, preferably also baffles or other means are provided upstream of the position or positions in the powder delivery tube from where gas is expelled to prevent any stray powder expelled with the gas from being conveyed along the other passage or passages towards the welding station. The or each passage extending past or adjacent to the welding station may be employed for the passage of a fluid or fluids to assist in cooling of the welded strip and in preventing undesirable heating of the powder delivery tube. For example, in one or more than one passage may be disposed a closed circulatory system for cooling gas or liquid. Additionally, where the advancing strip is of copper, an inert gas may be caused to flow through the or each passage extending past the welding station to prevent oxidation of copper in the region of the welding process.

The conductor rod or rods may be housed in a single guide tube which extends within the length of and beyond the downstream end of and is separately formed with respect to the powder delivery tube and which maintains the or each conductor rod from contact with the mineral insulating powder until the rod has emerged from the powder-delivery tube. Alternatively, each conductor rod may have its own separate guide tube within the powder-delivery tube for this purpose. The or each guide tube preferably incorporates means for effecting a substantially fluid-tight seal with the conductor rod or rods advancing therethrough. Where a guide tube or guide tubes is or are employed, the spacer member or members may be mounted at the downstream end or ends of the guide tube or tubes.

The invention also includes apparatus for use in the manufacture of mineral insulated electric cable, which apparatus comprises a fluid-tight chamber which contains mineral insulating powder and into which gas at a predetermined pressure can be introduced and, connected to said fluid-tight chamber, a powder delivery tube into which a conductor rod or rods can be continuously fed and which is adapted to extend into a metal tube from which the cable sheath is to be formed and which at its upstream end constitutes or is detachably connected to one branch of a bifurcated tubular fitting, said one branch of the fitting being adapted to be detachably connected to said fluid tight chamber, characterised in that the second branch of the fitting is adapted to effect a substantially fluid-tight seal with the conductor rod or conductor rods to be continuously fed through the second branch into the powder-delivery tube, and that the apparatus further includes at least one spacer member at or near the downstream end of the powder delivery tube, which spacer member is adapted to locate the or each conductor rod positively with respect to the metal tube and that has or at least partially bounds one or more than one passage through which mineral insulating powder can pass from the powder delivery tube into the metal tube; at least one gas outlet port which is disposed near the downstream end of the powder delivery tube and which has an associated filter for preventing or at least substantially restraining mineral insulating powder from being expelled with the gas through the outlet port; and, downstream of the gas outlet port or ports, filtering means for preventing or at least substantially restraining mineral insulating powder from flowing from the metal tube back between the powder delivery tube and the metal tube.

The invention is further illustrated by a description, by way of example, of the preferred method of continuously manufacturing mineral insulated electric cable in which the metal sheath tube is continuously formed by transversely folding an advancing ductile metal strip into tubular form and welding the edges of the advancing strip together, with reference to the accompanying drawings, in which:-
Figure 1 is a diagrammatic side view of the preferred apparatus for use in the preferred method;
Figure 2 is a diagrammatic transverse cross-sectional view of the powder delivery tube of the preferred apparatus taken on the line II-II in Figure 1, drawn on an enlarged scale;
Figure 3 is a sectional side view of the preferred bifurcated fitting at the upstream end of the powder delivery tube of the preferred apparatus shown in Figure 1;
Figure 4 is an end view of the second branch of the bifurcated fitting shown in Figure 3;
Figure 5 is a transverse cross-sectional view of the second branch of the bifurcated fitting taken on the line V-V in Figure 3;
Figure 6 is a diagrammatic sectional side view of one preferred fitting for detachable connection to the downstream end of the powder delivery tube of the preferred apparatus shown in Figure 1, and
Figures 7 and 8, respectively, are a diagrammatic sectional side view and an end view taken in the direction of arrow A of a second preferred fitting for detachable connection to the downstream end of the powder delivery tube of the preferred apparatus shown in Figure 1.

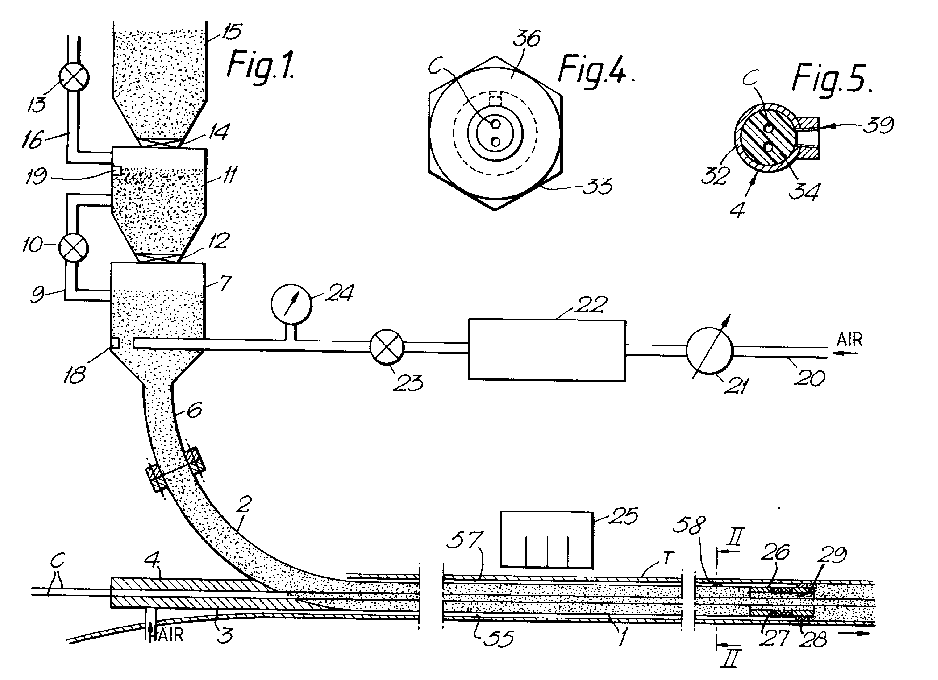

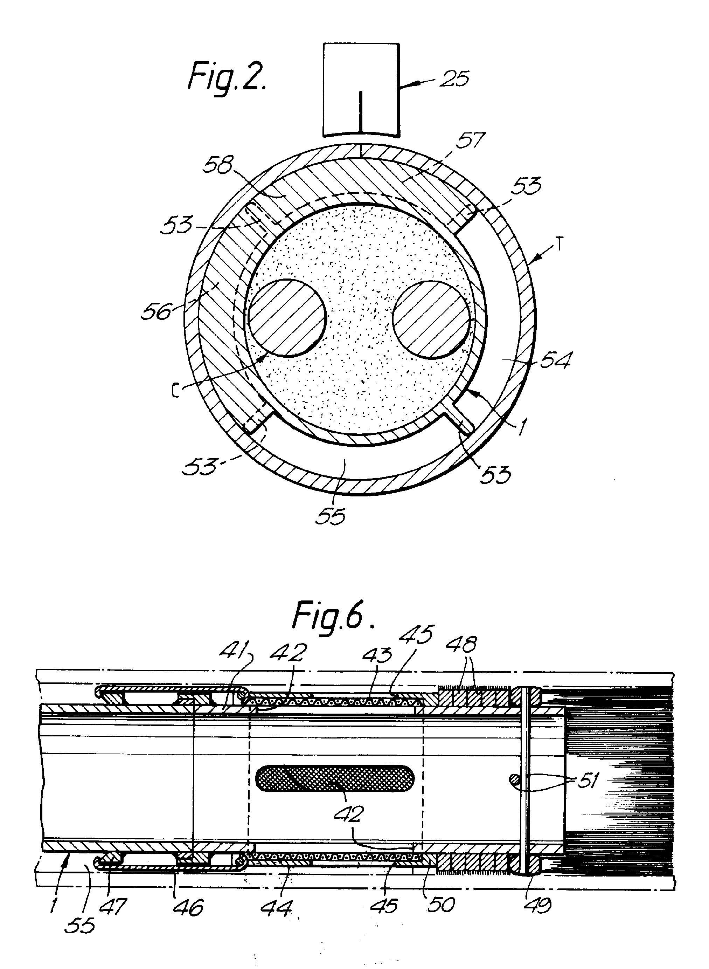

Referring to Figures 1 and 2, the preferred apparatus for use in the preferred method of manufacturing mineral insulated electric cable comprises a powder delivery tube 1 which over a major part of its length is disposed substantially horizontally and which, over a minor part 2 of its length at its upstream end, is smoothly curved in an upward direction. The minor end part 2 of the delivery tube 1 constitutes one branch of a bifurcated tubular fitting 3, the second branch 4 of which is in axial alignment with the major part of the length of the delivery tube 1. Positioned above and upstream of the minor end part 2 of the delivery tube 1 is a fluid-tight main chamber 7 for mineral insulating powder, which chamber is detachably connected to the minor end part of the delivery tube by a smoothly curved pipe 6. A fluid-tight supplementary powder chamber 11 for automatically re-charging the main chamber 7 is disposed above and connected via an automatically-operable valve 12 to the main chamber. The main powder chamber 7 and supplementary powder chamber 11 are also interconnected by a pipe 9 in which is fitted an automatically operable valve 10. The supplementary powder chamber 11 has at its upper end an outlet pipe 16 open to the atmosphere in which is an automatically operable valve 13. A hopper 15 mounted above the supplementary powder chamber 11 and fed with mineral insulating powder from a bulk source (not shown) is connected to the supplementary powder chamber via an automatically operable valve 14. The main powder chamber 7 incorporates a level sensor 18 for detecting a predetermined minimum level of powder in the chamber and the supplementary powder chamber 11 has a level detector 19 for detecting a predetermined maximum level of powder in the supplementary chamber. Clean dry air from a source (not shown) is continuously injected into the main powder chamber 7 through a pipe 20 via a pressure controller 21, an accumulator 22 and a valve 23, the pressure of the clean dry air being recorded by a gauge 24. Within the main powder chamber 7, the pipe 20 extends around the chamber and has in its wall a multiplicity of mutually spaced apertures through which dry clean air under the required predetermined pressure is expelled in a plurality of directions into the chamber. A rotatably driven screw (not shown) may be so disposed in the main powder chamber 7 that, when the screw is rotatably driven about its axis, mineral insulating powder is encouraged to flow towards the outlet of the chamber and down the pipe 6.

Intermediate of the ends of the powder delivery tube 1 is a welding station 25 at which the edges of an advancing ductile metal strip T, which is travelling in the direction of its length and is being transversely folded into tubular form around the powder delivery tube so that it surrounds and is radially spaced from the delivery tube, are continuously welded together to form a metal sheath tube into which mineral insulating powder is to be fed and partially compacted around advancing conductor rods C at a required fill density.

Detachably connected to the downstream end of the powder delivery tube 1 is a separately formed fitting 26 which incorporates or constitutes filtered outlet ports 27 through which gas is expelled from the delivery tube, at least one spacer member for locating the conductor rods C positively with respect to the advancing metal tube T, a passage or passages 29 for flow of powder from the delivery tube into the metal tube and filtering means 28 disposed between the fitting and the metal tube downstream of the filtered outlet ports.

The powder delivery tube 1 has, extending from immediately upstream of the fitting 26 to a position downstream of the bifurcated fitting 3, four circumferentially spaced radially outwardly extending longitudinally continuous ribs 53 which bear against and space the advancing metal tube T from the delivery tube and which define independent longitudinally extending passages 54, 55, 56 and 57. The downstream ends of passages 56 and 57 are closed by deflectors 58. The upstream ends of passages 54 and 55 may be open to the atmosphere via a filter bag (not shown) or may be connected to a re-claim or re-cycling plant. Upstream of their closed downstream ends, passages 56 and 57 may be interconnected.

Downstream of the separately formed fitting 26 and upstream of rolls or a die or dies (not shown) for reducing the cross-sectional size of the powder filled tube T, the apparatus may include at least one device (not shown) for vibrating the powder filled tube to assist in partial compaction of the powder in the tube and around the conductor rods.

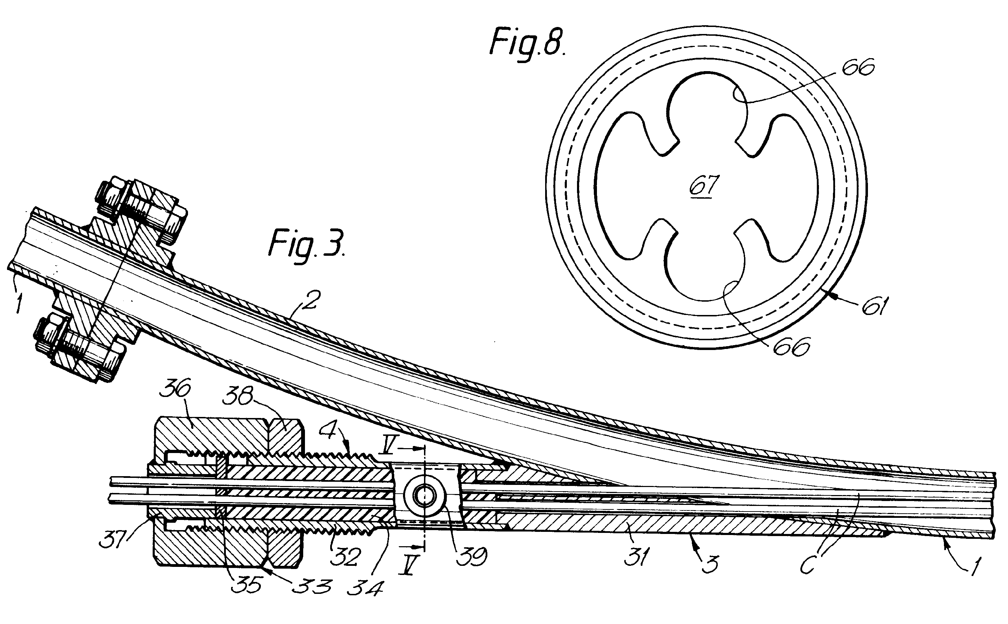

As will be seen more clearly on referring to Figures 3 to 5, the second branch 4 of the bifurcated fitting 3 is built up of a tubular body 31 which is welded to and opens into the minor end part 2 of the powder delivery tube and, secured to the free end of the tubular body, a sleeve 32 which is externally screw-threaded over a part of its length. Secured to the free end of the sleeve 32 is a gland unit 33 comprising an elongate plug 34 of semi-rigid microporous polymeric material or of sintered metal, which plug effects a fluid-tight fit in the bore of the sleeve in such a way that the plug is restrained against rotational movement with respect to the sleeve and has, for each advancing conductor rod C, a throughbore of such a diameter that the plug will effect a fluid-tight seal with the conductor rod advancing therethrough. A washer 35 of compressible fluid-impermeable material is urged against the upstream end face of the elongate plug 34 by a tubular protuberance 37 within a gland nut 36 which is in screw threaded engagement with the upstream end of the sleeve 32 and which can be locked in position by a lock nut 38. The elongate plug 34 abuts the end face of the tubular body 31 so that the plug and/or washer 35 can be axially compressed by tightening of the gland nut 36.

The sleeve 32 has in its peripheral wall an inlet port 39 through which clean dry air under a predetermined pressure can be injected into the second branch 4 of the bifurcated fitting 3 and flow along the second branch into the upstream end of the powder delivery tube 1, thereby substantially reducing the risk of build up of powder at the intersection of the branches of the fitting. For this purpose, the semi-rigid microporous polymeric material or sintered metal of the elongate plug 34 is sufficiently fluid-permeable to permit flow of clean dry air under said predetermined pressure from the inlet port 39 through the porous material of the plug and into the bore of the tubular body 31 and serves as a filter preventing leakage of mineral insulating powder through the upstream end of the second branch 4.

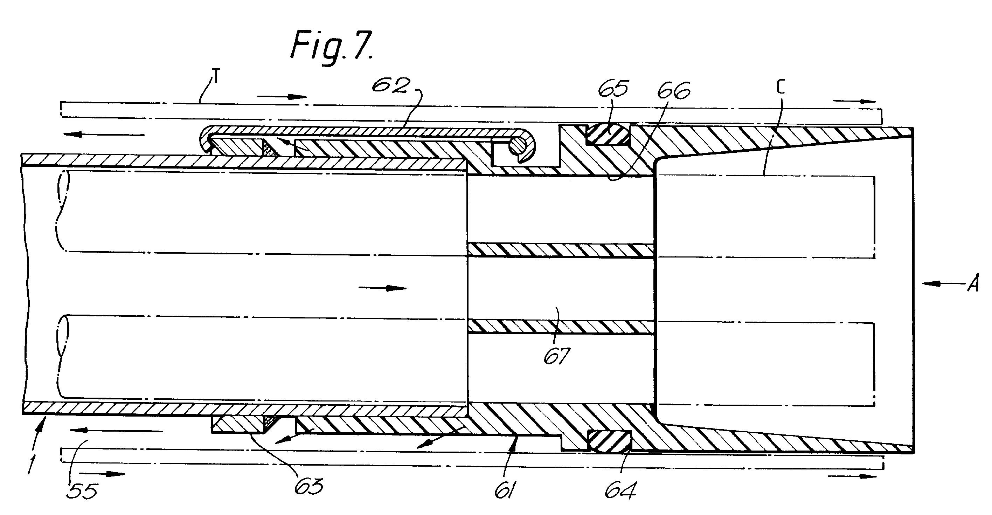

Referring to Figure 6, the first preferred fitting 26 (Figure 1) for detachable connection to the downstream end of the powder delivery tube 1 comprises a sleeve 41 having intermediate of its ends a plurality of circumferentially spaced holes 42 each of an elongate shape extending substantially parallel to the axis of the sleeve. Between its ends the sleeve 41 is surrounded by a sleeve 43 of stainless steel gauze which overlies the holes 42 and constitutes a filter for each hole. The gauze sleeve 43 is itself surrounded by an outer sleeve 44 which has a like plurality of circumferentially spaced holes 45 and which can be adjustably secured with respect to the sleeve 41, the holes 45 each being of such a shape and size having regard to the shapes and sizes of the holes 42 in the sleeve 41 that, by appropriate adjustment of the outer sleeve 44 with respect to the sleeve 41, the cross-sectional area of each filtered outlet port 27 (Figure 1) constituted by the aligned holes 42 and 45 can be readily adjusted such as may be necessary to accommodate mineral insulating powders of granular compositions differing from one another. The sleeve 41 has an internal diameter substantially equal to that of the powder delivery tube 1 and is detachably secured to the downstream end of the powder delivery tube by a plurality of circumferentially spaced resilient clips 46, each of which is pivotally mounted on the outer surface of the sleeve 41 and effects a snap fit over a shoulder 47 on the outer surface of the powder delivery tube. The filtering means 28 of the fitting disposed between the fitting and the metal tube T downstream of the filtered outlet ports comprises five brushes 48 each of circular form and having a multiplicity of bristles of stainless steel extending radially outwardly and, immediately downstream of the circular brushes, a brush 49 which is of tubular form and has a multiplicity of bristles of stainless steel and which is so disposed that the bristles extend lengthwise between the fitting and the metal tube T with the free ends of the bristles protruding beyond the downstream end of the fitting. The five circular brushes 48 are clamped between a shoulder 50 on the sleeve 41 and the tubular brush 49 which is secured to the sleeve by two diametrically extending silver steel pins 51 crossing one another at an angle and constituting spacer members locating the conductor rods C positively with respect to the metal tube T and partially bounding passages 29 (Figure 1) for flow of mineral insulating powder from the powder delivery tube 1 and the fitting into the metal tube.

Referring to Figures 7 and 8, the second preferred fitting 26 (Figure 1) for detachable connection to the downstream end of the powder delivery tube 1 comprises a tubular body 61 which, at its upstream end, fits over the downstream end of the powder delivery tube and is detachably secured to the delivery tube by a plurality of circumferentially spaced resilient clips 62 which are pivotally mounted on the outer surface of the body and effect snap fits over a shoulder 63 on the outer surface of the delivery tube. Intermediate of its ends, the tubular body 61 has in its outer surface a circumferentially continuous groove 64 in which is housed a ring 65 of bronze-filled polytetrafluoroethylene which constitutes filtering means 28 (Figure 1) between the fitting and the advancing metal tube T. Over a part of its length nearer its downstream end, the internal diameter of the tubular body 61 increases smoothly in a direction towards the downstream end of the body. Intermediate of its ends the tubular body 61 has a transverse cross-section which defines two diametrically spaced passageways 66 for the advancing conductor rods C and, between and to each side of these passageways, a passage 67 for flow of mineral insulating powder from the powder delivery tube 1 and the fitting into the advancing metal tube T. In addition to constituting the spacer member serving to locate the conductor rods C positively with respect to the metal tube T, the tubular body 61 also constitutes filtered outlet ports 27 (Figure 1) for expulsion of gas from the powder delivery tube 1 and, for this purpose, the tubular body is made of a semi-rigid microporous polymeric material or of a sintered metal which is sufficiently fluid-permeable to permit expulsion of the clean dry air therethrough and which serves as a filter preventing expulsion of mineral insulating powder with the air.

When using the apparatus illustrated in Figures 1 to 6 in the manufacture of mineral insulated electric cable in which the metal sheath tube is continuously formed transversely folding an advancing ductile metal strip into tubular form and welding the edges of the advancing strip together, the outer sleeve 44 of the fitting 26 shown in Figure 6 is rotatably adjusted and secured with respect to the sleeve 41 to provide in the fitting filtered outlet ports 27 (Figure 1) of the required cross-sectional area having regard to the required air to powder ratio of the mineral insulating powder to be introduced into the metal tube T. Conductor rods C are continuously fed through the second branch 4 of the bifurcated fitting 3 into the powder delivery tube 1 and the metal tube T is continuously formed by transversely folding the advancing ductile metal strip around the powder delivery tube and continuously welding its edges together as they travel past the welding station 25. With valve 23 open and valves 10, 12, 13 and 14 closed, clean dry air at a predetermined pressure is injected via the pipe 20 and accumulator 22 into the main powder chamber 7 and mineral insulating powder under the pressure of the clean dry air is continuously fed via the pipe 6 and the minor end part 2 of the powder delivery tube 1 into the powder delivery tube. Clean dry air also at a predetermined pressure is injected into the bifurcated fitting 3 through the inlet port 39 to prevent build up of mineral insulating powder at the intersection of the branches of the fitting.

When the level of mineral insulating powder in the main powder chamber 7 falls to a predetermined level, this low level of powder is detected by the level sensor 18 which automatically initiates a command sequence. Valve 10 opens to balance the pressures in the main chamber 7 and supplementary chamber 11 and, after a short time delay, valve 12 opens to allow a charge of powder to fall from the supplementary chamber into the main chamber. After a suitable time delay, valve 12 closes, valve 10 closes and then valve 13 opens to relieve the pressure in the supplementary chamber 11. After a further short time delay, valve 14 opens to allow powder from the hopper 15 to flow into the supplementary chamber 11. When the level of powder in the supplementary chamber 11 has risen to a predetermined level, this high level is detected by the level sensor 19 which automatically causes valves 13 and 14 to close. Normal operation of the apparatus then continues until the level of powder in the main chamber 7 again falls to said predetermined low level when the aforesaid cycle is repeated.

For safety purposes, an additional level sensor may be fitted in the hopper 15 and a manual over-ride may be provided under controlled circumstances for maintenance and testing. An emergency stop may also be provided which will shut down the system in a safe and controlled manner should this be necessary.

Mineral insulating powder under the pressure of the dry clean air is injected from the powder delivery tube 1 through the bore of the fitting 26 into the advancing metal tube T so that mineral insulating powder fills the space around the conductor rods C and is partially compacted under the pressure of the dry clean air. Dry clean air is expelled through the filtered outlet ports 27 (Figure 1) constituted by the aligned holes 42 and 45 of the sleeves 41 and 44 and the intervening gauze sleeve 43 (Figure 6), flows back between the powder delivery tube 1 and the advancing metal tube T and is deflected by the deflectors 58 to flow along passages 54 and 55 and convey heat emitted by the advancing metal tube. Filtering means 28 constituted by the brushes 48 and 49 downstream of the filtered outlet ports 27 prevent mineral insulating powder from the metal tube T from flowing back between the metal tube and the fitting. From the passages 54 and 55, the dry clean air may be expelled to the atmosphere via a filter bag (not shown) to catch any stray powder expelled with the gas or it may be fed to a re-claim or re-cycling plant.

Passages 56 and 57 may form part of a closed circulatory system through which a cooling fluid, such as argon, can be caused to flow to prevent undesirable heating of the powder delivery tube 1 during the welding operation.

## Claims

1. A method of manufacturing mineral insulated electric cable comprising simultaneously continuously introducing mineral insulating powder and a conductor rod or conductor rods (C) into a metal tube (T) from which the cable sheath is to be formed, the mineral insulating powder being injected into the metal tube under the pressure of a gas via a powder delivery tube (1) which extends into the metal tube and through which the or each conductor rod is continuously fed, so that mineral insulating powder fills the space around the conductor rod or rods within the metal tube and is partially compacted under said gaseous pressure; and causing the filled tube to pass through means by which the cross-sectional size of the filled tube is reduced, characterised in that gas is expelled from the powder delivery tube (1) near its downstream end in such a way that the expelled gas flows from the powder delivery tube back between the powder delivery tube and the metal tube (T) and in that mineral insulating powder is prevented or at least substantially restrained from being expelled with the gas from the powder delivery tube and from flowing from the metal tube back between the powder delivery tube and the metal tube.

2. A method as claimed in Claim 1, characterised in that expulsion of gas from the powder delivery tube (1) near its downstream end is effected through at least one outlet port (27) having an associated filter which prevents or at least substantially restrains mineral insulating powder from being expelled with the gas.

3. A method as claimed in Claim 2, characterised in that mineral insulating powder is prevented or substantially restrained from flowing from the metal tube (T) back between the powder delivery tube (1) and the metal tube by filtering means (28) disposed between the powder delivery tube and the metal tube downstream of the filtered outlet port or ports (27).

4. A method as claimed in any one of the preceding Claims, characterised in that during simultaneous continuous introduction of mineral insulating powder and the conductor rod or rods (C) into the metal tube (T), the metal tube is continuously formed around and radially spaced from the powder delivery tube (1) by transversely folding into tubular form a ductile strip advancing in the direction of its length with respect to the powder delivery tube and continuously welding together the edges of the advancing strip.

5. A method as claimed in Claim 4, characterised in that the downstream end of the powder delivery tube (1) is downstream of the station (25) at which the edges of the transversely folded metal strip are welded together and the gas expelled from the powder delivery tube and flowing back between the powder delivery tube and the surrounded folded metal strip serves to convey from said welding station heat emitted by the welding process.

6. A method as claimed in any one of the preceding Claims, characterised in that the gas is dry, clean air.

7. A method as claimed in any one of the preceding Claims, characterised in that the metal tube (T) and the powder delivery tube (1) over at least major parts of their lengths are disposed substantially horizontally and mineral insulating powder under the pressure of said gas is injected into the upstream end of the powder delivery tube from a fluid-tight chamber (7) which is mounted above and upstream of the powder delivery tube and into which said gas is introduced at a predetermined pressure.

8. A method as claimed in any one of the preceding Claims, wherein, at the upstream end of the powder delivery tube (1) the delivery tube constitutes or is detachably connected to one branch (2) of a bifurcated tubular fitting (3), the or each conductor rod (C) is fed through the second branch (4) of the bifurcated fitting into the powder delivery tube through a gland unit (33) in the second branch effecting a substantially fluid-tight seal with the advancing rod or rods, and gas under a predetermined pressure is injected into the second branch of the bifurcated fitting through at least one inlet port (39) in its peripheral wall and flows along said second branch into the upstream end of the powder delivery tube.

9. A method as claimed in any one of the preceding Claims, characterised in that the powder delivery tube (1) has at or near its downstream end at least one spacer member (51;66) which serves to locate the or each conductor rod (C) positively with respect to the metal tube (T) and which has or at least partially bounds one or more than one passage (29;67) through which mineral insulated powder passes from the powder delivery tube into the metal tube (T).

10. Apparatus for use in the manufacture of mineral insulated electric cable, which apparatus comprises a fluid-tight chamber (7) which contains mineral insulating powder and into which gas at a predetermined pressure can be introduced and, connected to said fluid-tight chamber, a powder delivery tube (1) into which a conductor rod or rods (C) can be continuously fed and which is adapted to extend into a metal tube (T) from which the cable sheath is to be formed and which at its upstream end constitutes or is detachably connected to one branch of a bifurcated tubular fitting, said one branch of the fitting being adapted to be detachably connected to said fluid tight chamber (7), characterised in that the second branch of the fitting is adapted to effect a substantially fluid-tight seal with the conductor rod or conductor rods (C) to be continuously fed through the second branch into the powder-delivery tube, and that the apparatus further includes at least one spacer member (51;66) at or near the downstream end of the powder delivery tube, which spacer member is adapted to locate the or each conductor rod positively with respect to the metal tube and that has or at least partially bounds one or more than one passage (29;67) through which mineral insulating powder can pass from the powder delivery tube into the metal tube; at least one gas outlet port (27;42,45) which is disposed near the downstream end of the powder delivery tube and which has an associated filter (43;61) for preventing or at least substantially restraining mineral insulating powder from being expelled with the gas through the outlet port; and, downstream of the gas outlet port or ports, filtering means (28;48,49;65) for preventing or at least substantially restraining mineral insulating powder from flowing from the metal tube back between the powder delivery tube and the metal tube.

11. Apparatus as claimed in Claim 10, characterised in that the or each gas outlet port (27;42,45) and its associated filter forms part of a fitting (26;61) which is separately formed with respect to, and is detachably secured to the downstream end of, the powder delivery tube.

12. Apparatus as claimed in Claims 11, characterised in that the separately formed fitting (26;61) incorporates or constitutes said spacer member or members (51;66) serving to locate the or each conductor rod (C) with respect to the metal tube (T).

13. Apparatus as claimed in Claim 11 or 12, characterised in that the separately formed fitting (26) comprises a sleeve (41) having intermediate of its ends a plurality of circumferentially spaced holes (42) and, associated with each hole, a gauze (43) of stainless steel or other metal or metal alloy constituting a filter and, surrounding the inner sleeve, an outer sleeve (44) which is separately formed with respect to said inner sleeve and has a like plurality of circumferentially spaced holes (45) and which can be adjustably secured with respect to the inner sleeve, the holes in the outer sleeve each being of such a shape and size having regard to the shapes and sizes of the holes in the inner sleeve that, by appropriate adjustment of the outer sleeve with respect to the inner sleeve, the cross-sectional area of each filtered gas outlet port constituted by the overlying holes in the sleeves can be readily adjusted.

14. Apparatus as claimed in Claim 13, characterised in that the filtering means (28) of the fitting (26) downstream of the outlet port or ports (27) comprises a brush (49) which is of tubular form and which has a multiplicity of bristles of stainless steel or other metal or metal alloy and which is so detachably secured to the downstream end of the inner sleeve (41) that the bristles extend lengthwise between the fitting and the metal tube (T) with the free ends of the bristles protruding beyond the downstream end of the fitting and, detachably secured to the inner sleeve immediately upstream of the tubular brush, at least one brush (48) which is of circular form and has a multiplicity of bristles of stainless steel or other metal alloy extending radially outwardly.

15. Apparatus as claimed in Claim 13 or 14, characterised in that the or each spacer member (51) for locating the or each conductor rod (C) with respect to the metal tube (T) comprises a substantially rigid pin which extends diametrically within the inner sleeve (41) of the fitting (28) downstream of the holes (42) in the inner sleeve.

16. Apparatus as claimed in Claim 11 or 12, characterised in that the separately formed fitting (61) constitutes the spacer member for locating the or each conductor rod (C) positively with respect to the metal tube (T) and having or at least partially bounding the passage or passages (67) through which mineral insulating powder can pass from the powder delivery tube (1) into the metal tube (T), which spacer member has a circumferentially continuous wall which, over at least a part of its length nearer its upstream end, is made of a material sufficiently fluid-permeable to permit expulsion of the gas therethrough and serving as a filter preventing or substantially restraining expulsion of mineral insulating powder with the gas.

17. Apparatus as claimed in Claim 16, characterised in that the fluid-permeable material of the fitting (61) is a semi-rigid microporous polymeric material or a sintered metal.

18. Apparatus as claimed in any one of Claims 10 to 17, wherein, at its upstream end the powder delivery tube (1) constitutes or is detachably connected to one branch (2) of a bifurcated tubular fitting (3), said one branch of the fitting being detachably connected to the fluid-tight chamber (7) and the second branch (4) of the fitting being adapted to effect a substantially fluid-tight seal with a conductor rod or conductor rods (C) to be continuously fed through the second branch into the powder delivery tube (1).

19. Apparatus as claimed in Claim 18, characterised in that the second branch (4) of the bifurcated tubular fitting (3) has a gland unit (33) for effecting a substantially fluid-tight seal with an advancing conductor rod or advancing conductor rods (C) and at least one inlet port (39) in its peripheral wall through which gas under a predetermined pressure can be injected into the second branch.

20. Apparatus as claimed in any one of the preceding Claims, characterised in that the fluid-tight chamber (7) is connected via an automatically operable valve (12) to a supplementary fluid-tight chamber (11) from which a predetermined quantity of mineral insulating powder under the pressure of said gas can be fed into the fluid-tight chamber when the quantity of powder in the chamber falls to a predetermined level.

21. Apparatus as claimed in Claim 20, characterised in that the supplementary fluid-tight chamber (11) is connected via an automatically-operable valve (14) to a source (15) of mineral insulating powder from which the supplementary chamber can be automatically re-charged with mineral insulating powder.

## Patentansprüche

1. Verfahren zur Herstellung eines mineralisolierten elektrischen Kabels, wobei mineralisolierendes Pulver und ein Leiterstab oder Leiterstäbe (C) in ein Metallrohr (T), aus dem der Kabelmantel gebildet werden soll, gleichzeitig kontinuierlich eingeführt werden und das mineralisolierende Pulver unter dem Druck eines Gases in das Metallrohr über ein Pulverauslaßrohr (1) eingespritzt wird, das sich in das Metallrohr erstreckt und durch das der oder jeder Leiterstab fortlaufend eingeführt wird, so daß mineralisolierendes Pulver den Raum um den Leiterstab oder die Leiterstäbe in dem Metallrohr ausfüllt und unter dem Gasdruck teilweise zusammengepreßt wird; und bei dem das gefüllte Rohr durch eine Einrichtung geführt wird, die die Querschnittsgröße des gefüllten Rohrs reduziert, dadurch gekennzeichnet, daß Gas aus dem Pulverauslaßrohr (1) nahe seinem stromabwärts gelegenen Ende so ausgestoßen wird, daß das ausgestoßene Gas aus dem Pulverauslaßrohr zurück zwischen das Pulverauslaßrohr und das Metallrohr (T) fließt, und daß mineralisolierendes Pulver daran gehindert oder mindestens wesentlich darin eingeschränkt wird, mit dem Gas aus dem Pulverauslaßrohr ausgestoßen zu werden und aus dem Metallrohr zurück zwischen das Pulverauslaßrohr und das Metallrohr zu fließen.

2. Verfahren nach Anspruch 1, dadurch gekennzeichnet, daß das Ausstoßen von Gas aus dem Pulverauslaßrohr (1) nahe seinem stromabwärts gelegenen Ende durch mindestens eine Auslaßöffnung (27) mit einem dazugehörigen Filter bewirkt wird, der verhindert oder mindestens wesentlich einschränkt, daß mineralisolierendes Pulver mit dem Gas ausgestoßen wird.

3. Verfahren nach Anspruch 2, dadurch gekennzeichnet, daß mineralisolierendes Pulver durch eine Filtriereinrichtung (28), die zwischen dem Pulverauslaßrohr und dem Metallrohr stromabwärts von der gefilterten Auslaßöffnung oder den Auslaßöffnungen (27) angeordnet ist, daran gehindert oder wesentlich darin eingeschränkt wird, aus dem Metallrohr (T) zurück zwischen das Pulverauslaßrohr (1) und das Metallrohr zu fließen.

4. Verfahren nach irgendeinem der vorstehenden Ansprüche, dadurch gekennzeichnet, daß während dem gleichzeitigen kontinuierlichen Einleiten des mineralisolierenden Pulvers und des Leiterstabs oder der Leiterstäbe (C) in das Metallrohr (T) das Metallrohr kontinuierlich um das Pulverauslaßrohr (1) herum gebildet und radial von ihm beabstandet wird, indem ein dehnbarer Streifen, der bezüglich des Pulverauslaßrohrs in seiner Längsrichtung vorrückt, in Rohrform in Querrichtung gefaltet wird und kontinuierlich die Kanten des vorrückenden Streifens zusammengeschweißt werden.

5. Verfahren nach Anspruch 4, dadurch gekennzeichnet, daß das stromabwärts gelegene Ende des Pulverauslaßrohrs (1) stromabwärts von der Stelle (25) liegt, an der die Kanten des in Querrichtung gefalteten Metallstreifens zusammengeschweißt werden und das Gas, das aus dem Pulverauslaßrohr ausgestoßen wird und zurück zwischen das Pulverauslaßrohr und den umgebenden, gefalteten Metallstreifen fließt, dazu dient, Wärme, die an der Schweißstelle bei dem Schweißvorgang ausgestrahlt wird, zu übertragen.

6. Verfahren nach irgendeinem der vorstehenden Ansprüche, dadurch gekennzeichnet, daß das Gas trockene, saubere Luft ist.

7. Verfahren nach irgendeinem der vorstehenden Ansprüche, dadurch gekennzeichnet, daß das Metallrohr (T) und das Pulverauslaßrohr (1) über mindestens größere Abschnitte ihrer Längen im wesentlichen waagrecht angeordnet sind und mineralisolierendes Pulver unter dem Druck des Gases von einer fluiddichten Kammer (7), die oberhalb und stromaufwärts von dem Pulverauslaßrohr befestigt ist, und in die das Gas unter einem bestimmten Druck eingeleitet wird, in das stromaufwärts gelegene Ende des Pulverauslaßrohrs eingespritzt wird.

8. Verfahren nach irgendeinem der vorstehenden Ansprüche, wobei an dem stromaufwärts gelegenen Ende des Pulverauslaßrohrs (1) das Auslaßrohr einen Zweig (2) eines verzweigten Rohrverbindungsstücks (3) bildet oder mit ihm abnehmbar verbunden ist, wobei der oder jeder Leiterstab (C) durch den zweiten Zweig (4) des verzweigten Verbindungsstücks in das Pulverauslaßrohr durch eine Dichtungseinheit (33) in dem zweiten Zweig eingeführt wird, die eine im wesentlichen fluiddichte Abdichtung mit dem vorrückenden Stab oder den Stäben bewerkstelligt, und das Gas unter einem bestimmten Druck in den zweiten Zweig des verzweigten Verbindungsstücks durch mindestens eine Einlaßöffnung (39) in seinem Mantel eingespritzt wird und entlang des zweiten Zweigs in das stromaufwärts gelegene Ende des Pulverauslaßrohrs fließt.

9. Verfahren nach irgendeinem der vorstehenden Ansprüche, dadurch gekennzeichnet, daß das Pulverauslaßrohr (1) an oder nahe seinem stromabwärts gelegenen Ende mindestens ein Distanzstück (51; 66) besitzt, das dazu dient, den oder jeden Leiterstab (C) fest bezüglich des Metallrohrs (T) anzuordnen, und das einen oder mehr als einen Durchgang (29; 67) besitzt oder mindestens teilweise abgrenzt, durch den mineralisolierendes Pulver aus dem Pulverauslaßrohr in das Metallrohr (T) fließt.

10. Vorrichtung zur Verwendung bei der Herstellung eines mineralisolierten elektrischen Kabels, wobei die Vorrichtung eine fluiddichte Kammer (7), die mineralisolierendes Pulver enthält und in die Gas unter einem bestimmten Druck eingeleitet werden kann, und, verbunden mit der fluiddichten Kammer, ein Pulverauslaßrohr (1) aufweist, in das ein Leiterstab oder Leiterstäbe (C) fortlaufend eingeführt werden können, und das daran angepaßt ist, sich in ein Metallrohr (T), aus dem der Kabelmantel gebildet werden soll, zu erstrecken, und das an seinem stromaufwärts gelegenen Ende einen Zweig eines verzweigten Rohrverbindungsstücks bildet oder mit ihm abnehmbar verbunden ist, wobei dieser Zweig des Verbindungsstücks so ausgebildet ist, das er mit der fluiddichten Kammer (7) abnehmbar verbunden werden kann, dadurch gekennzeichnet, daß der zweite Zweig des Verbindungsstücks so ausgebildet ist, eine im wesentlichen fluiddichte Abdichtung mit dem Leiterstab oder den Leiterstäben (C), die fortlaufend durch den zweiten Zweig in das Pulverauslaßrohr eingeführt werden sollen, zu bewerkstelligen, und daß die Vorrichtung ferner mindestens ein Distanzstück (51; 66) an oder nahe dem stromabwärts gelegenen Ende des Pulverauslaßrohrs umfaßt, wobei das Distanzstück daran angepaßt ist, den oder jeden Leiterstab fest bezüglich des Metallrohrs anzuordnen, und das einen oder mehr als einen Durchgang (29; 67), durch den mineralisolierendes Pulver aus dem Pulverauslaßrohr in das Metallrohr laufen kann, besitzt oder mindestens teilweise abgrenzt; mindestens eine Gasauslaßöffnung (27; 42, 45), die nahe dem stromabwärts gelegenen Ende des Pulverauslaßrohrs angeordnet ist, und die einen dazugehörigen Filter (43; 61) besitzt, um zu verhindern oder mindestens wesentlich einzuschränken, daß mineralisolierendes Pulver mit dem Gas durch die Auslaßöffnung ausgestoßen wird; und, stromabwärts von der Gasauslaßöffnung oder den Gasauslaßöffnungen, Filtriereinrichtungen (28; 48, 49; 65), um zu verhindern oder mindestens wesentlich einzuschränken, daß mineralisolierendes Pulver aus dem Metallrohr zurück zwischen das Pulverauslaßrohr und das Metallrohr fließt.

11. Vorrichtung nach Anspruch 10, dadurch gekennzeichnet, daß die oder jede Gasauslaßöffnung (27; 42, 45) und ihr zugehöriger Filter einen Teil eines Verbindungsstücks (26; 61) bildet, das separat bezüglich des stromabwärts gelegenen Endes des Pulverauslaßrohrs ausgebildet und an ihm abnehmbar befestigt ist.

12. Vorrichtung nach Anspruch 11, dadurch gekennzeichnet, daß das separat ausgebildete Verbindungsstück (26; 61) das Distanzstück oder die Distanzstücke (51; 66) enthält oder bildet, die dazu dienen, den oder jeden Leiterstab (C) bezüglich des Metallrohrs (T) anzuordnen.

13. Vorrichtung nach Anspruch 11 oder 12, dadurch gekennzeichnet, daß das separat ausgebildete Verbindungsstück (26) eine Muffe (41) mit einer Anzahl zwischen ihren Enden liegender, in Umfangsrichtung beabstandeter Löcher (42) und jedem Loch zugeordnet, eine Gaze (43) aus nichtrostendem Stahl oder einem anderen Metall oder einer Metallegierung, die einen Filter bildet, und, die innere Muffe umgebend, eine äußere Muffe (44) umfaßt, die separat bezüglich der inneren Muffe ausgebildet ist und eine gleiche Anzahl an in Umfangsrichtung beabstandeter Löcher (45) besitzt, und die einstellbar bezüglich der inneren Muffe befestigt werden kann, wobei die Löcher in der äußeren Muffe jeweils von solcher Form und Größe bezüglich Form und Größe der Löcher in der inneren Muffe sind, daß bei geeigneter Einstellung der äußeren Muffe bezüglich der inneren Muffe die Querschnittsfläche jeder gefilterten Gasauslaßöffnung, die durch die übereinanderliegenden Löcher in den Muffen gebildet wird, leicht eingestellt werden kann.

14. Vorrichtung nach Anspruch 13, dadurch gekennzeichnet, daß die Filtriereinrichtung (28) des Verbindungsstücks (26) stromabwärts von der Auslaßöffnung oder Auslaßöffnungen (27) eine Bürste (49) umfaßt, die röhrenförmig ist, und die eine Vielzahl von Borsten aus nichtrostendem Stahl oder einem anderen Metall oder einer Metallegierung besitzt, und die so an dem stromabwärts gelegenen Ende der inneren Muffe (41) abnehmbar befestigt ist, daß sich die Borsten der Länge nach zwischen dem Verbindungsstück und dem Metallrohr (T) erstrecken, wobei die freien Enden der Borsten über das stromabwärts gelegene Ende des Verbindungsstücks hinausragen, und, abnehmbar an der inneren Muffe direkt stromaufwärts von der röhrenförmigen Bürste befestigt, mindestens eine Bürste (48), die kreisförmig ist und eine Vielzahl von Borsten aus nichtrostendem Stahl oder einer anderen Metallegierung besitzt, die sich radial nach außen erstrecken.

15. Vorrichtung nach Anspruch 13 oder 14, dadurch gekennzeichnet, daß das oder jedes Distanzstück (51) zur Anordnung des oder jedes Leiterstabs (C) bezüglich des Metallrohrs (T) einen im wesentlichen starren Stift aufweist, der sich diametral innerhalb der inneren Muffe (41) des Verbindungsstücks (28) stromabwärts der Löcher (42) in der inneren Muffe erstreckt.

16. Vorrichtung nach Anspruch 11 oder 12, dadurch gekennzeich- net, daß das separat ausgebildete Verbindungsstück (61) das Distanzstück bildet, um den oder jeden Leiterstab (C) fest bezüglich des Metallrohrs (T) anzuordnen, und die den Durchgang oder die Durchgänge (67) besitzt oder mindestens teilweise abgrenzt, durch die mineralisolierendes Pulver aus dem Pulverauslaßrohr (1) in das Metallrohr (T) fließen kann, wobei das Distanzstück eine sich in Umfangsrichtung fortsetzende Wand besitzt, die über mindestens einen Teil ihrer Länge näher an ihrem stromaufwärts gelegenen Ende aus einem ausreichend fluiddurchlässigen Material besteht, um das Ausstoßen von Gas durch sie hindurch zu ermöglichen, und die als ein Filter dient, um das Ausstoßen von mineralisolierendem Pulver mit dem Gas zu verhindern oder wesentlich einzuschränken.

17. Vorrichtung nach Anspruch 16, dadurch gekennzeichnet, daß das fluiddurchlässige Material des Verbindungsstücks (61) ein halbstarres mikroporöses Polymermaterial oder ein Sintermetall ist.

18. Vorrichtung nach irgendeinem der Ansprüche 10 bis 17, wobei an seinem stromaufwärts gelegenen Ende das Pulverauslaßrohr (1) einen Zweig (2) eines verzweigten Rohrverbindungsstücks (3) darstellt oder mit ihm abnehmbar verbunden ist, wobei dieser Zweig des Verbindungsstücks mit der fluiddichten Kammer (7) abnehmbar verbunden ist, und der zweite Zweig (4) des Verbindungsstücks daran angepaßt ist, eine im wesentlichen fluiddichte Abdichtung mit einem Leiterstab oder den Leiterstäben (C) zu bewerkstelligen, die fortlaufend durch den zweiten Zweig in das Pulverauslaßrohr (1) eingeführt werden sollen.

19. Vorrichtung nach Anspruch 18, dadurch gekennzeichnet, daß der zweite Zweig (4) des verzweigten Rohrverbindungsstücks (3) eine Dichtungseinheit (33) besitzt, um eine im wesentlichen fluiddichte Abdichtung mit einem vorrückenden Leiterstab oder vorrückenden Leiterstäben (C) und mindestens eine Einlaßöffnung (39) in ihrem Mantel zu bewirken, durch die Gas unter einem bestimmten Druck in den zweiten Zweig eingespritzt werden kann.

20. Vorrichtung nach irgendeinem der vorstehenden Ansprüche, dadurch gekennzeichnet, daß die fluiddichte Kammer (7) über ein automatisch betriebsbereites Ventil (12) mit einer fluiddichten Zusatzkammer (11) verbunden ist, aus der eine bestimmte Menge mineralisolierendes Pulver unter dem Druck des Gases in die fluiddichte Kammer zugeführt werden kann, wenn die Pulvermenge in der Kammer auf einen bestimmten Füllstand sinkt.

21. Vorrichtung nach Anspruch 20, dadurch gekennzeichnet, daß die fluiddichte Zusatzkammer (11) über ein automatisch betriebsbereites Ventil (14) mit einer Quelle (15) mineralisolierenden Pulvers verbunden ist, von der aus die Zusatzkammer automatisch mit mineralisolierendem Pulver wiederaufgefüllt werden kann.

## Revendications

1. Procédé de fabrication d'un câble électrique isolé par une matière minérale, consistant simultanément à introduire de façon continue une poudre minérale isolante et une barre conductrice ou des barres conductrices (C) dans un tube métallique (T) sur lequel la gaine du câble doit être formée, la poudre minérale isolante étant injectée dans le tube métallique sous l'effet de la pression d'un gaz par l'intermédiaire d'un tube (1) de distribution de poudre qui s'étend jusque dans le tube métallique et à travers lequel la barre conductrice ou chaque barre conductrice est avancée de façon continue, de telle sorte que la poudre minérale isolante remplit l'espace autour de la barre ou des barres conductrices à l'intérieur du tube métallique et est tassée partiellement sous l'effet de la forte pression du gaz ; et à faire en sorte que le tube rempli traverse un moyen à l'aide duquel on réduit la dimension de la section du tube rempli, caractérisé en ce que l'on expulse le gaz du tube (1) de distribution de poudre au voisinage de son extrémité aval de manière telle que le gaz expulsé s'écoule depuis le tube de distribution de poudre vers l'arrière entre le tube de distribution de poudre et le tube métallique (T) et en ce que l'on empêche, ou tout au moins limite substantiellement, l'expulsion de la poudre minérale isolante avec le gaz hors du tube de distribution de poudre et son écoulement depuis le tube métallique vers l'arrière entre le tube de distribution de poudre et le tube métallique.

2. Procédé selon la revendication 1, caractérisé en ce que l'on effectue l'expulsion du gaz hors du tube (1) de distribution de poudre au voisinage de son extrémité aval à travers au moins un orifice de sortie (27) auquel est associé un filtre qui empêche, ou tout au moins limite substantiellement, l'expulsion de la poudre minérale isolante avec le gaz.

3. Procédé selon la revendication 2, caractérisé en ce que l'on empêche, ou limite substantiellement, l'écoulement de la poudre minérale isolante depuis le tube métallique (T) vers l'arrière entre le tube (1) de distribution de poudre et le tube métallique à l'aide d'un moyen de filtrage (28) disposé entre le tube de distribution de poudre et le tube métallique en aval de l'orifice ou des orifices de sortie (27) munis d'un filtre.

4. Procédé selon l'une quelconque des revendications précédentes, caractérisé en ce que, pendant l'introduction continue simultanée de poudre minérale isolante et de la barre ou des barres conductrices (C) dans le tube métallique (T), on forme de façon continue le tube métallique autour et à distance radialement du tube (1) de distribution de poudre en pliant transversalement sous forme tubulaire une bande ductile avançant dans la direction de sa longueur par rapport au tube de distribution de poudre et en soudant de façon continue l'un à l'autre les bords de la bande qui avance.

5. Procédé selon la revendication 4, caractérisé en ce que l'extrémité aval du tube (1) de distribution de poudre se trouve en aval du poste (25) où on soude l'un à l'autre les bords de la bande métallique pliée transversalement et où le gaz expulsé du tube de distribution de poudre s'écoulant vers l'arrière entre le tube de distribution de poudre et la bande métallique pliée qui l'entoure sert à transporter hors dudit poste de soudage la chaleur émise par l'opération de soudage.

6. Procédé selon l'une quelconque des revendications précédentes, caractérisé en ce que le gaz est de l'air propre, sec.

7. Procédé selon l'une quelconque des revendications précédentes, caractérisé en ce que l'on dispose de façon horizontale le tube métallique (T) et le tube (1) de distribution de poudre sur au moins la majeure partie de leur longueur et l'on injecte la poudre minérale isolante sous l'effet de la pression dudit gaz dans l'extrémité amont du tube de distribution de poudre depuis une chambre (7) qui est étanche aux fluides et qui est montée au-dessus et en amont du tube de distribution de poudre et dans laquelle on introduit ledit gaz à une pression prédéterminée.

8. Procédé selon l'une quelconque des revendications précédentes, dans lequel, à l'extrémité amont du tube (1) de distribution de poudre, le tube de distribution constitue une première branche (2) d'un raccord tubulaire (3) à bifurcation ou est raccordé de façon séparable à une telle première branche, la barre ou chaque barre conductrice (C) est avancée à travers la seconde branche (4) du raccord à bifurcation jusque dans le tube de distribution de poudre à travers un presse-étoupe (33) se trouvant dans la seconde branche et constituant un joint qui est sensiblement étanche au fluide avec la barre ou les barres qui avancent, et le gaz sous pression prédéterminée est injecté dans la seconde branche du raccord à bifurcation à travers au moins un orifice d'entrée (39) de sa paroi périphérique et s'écoule le long de la seconde branche jusque dans l'extrémité amont du tube de distribution de poudre.

9. Procédé selon l'une quelconque des revendications précédentes, caractérisé en ce que le tube (1) de distribution de poudre comporte à son extrémité aval ou près de son extrémité aval au moins un élément d'espacement (51; 66) qui sert à placer la barre ou chaque barre conductrice (C) positivement par rapport au tube métallique (T) et qui comporte, ou tout au moins délimite partiellement, un ou plusieurs passages (29; 67) -à travers lesquels la poudre minérale isolante passe du tube de distribution de poudre au tube métallique (T).

10. Appareil destiné à être utilisé dans la fabrication d'un câble électrique isolé par une matière minérale, cet appareil comprenant une chambre (7) étanche aux fluides qui contient une poudre minérale isolante et dans laquelle un gaz sous une pression prédéterminée peut être introduit, et, raccordé à ladite chambre étanche aux fluides, un tube (1) de distribution de poudre dans lequel une barre ou des barres conductrices (C) peuvent être avancées de façon continue et qui est adaptée pour s'étendre jusque dans un tube métallique (T) sur lequel la gaine du cable doit être formée et qui, à son extrémité amont, constitue une première branche d'un raccord tubulaire à bifurcation ou est raccordée de façon amovible à cette branche, ladite première branche du raccord étant adaptée pour être raccordée de façon séparable à ladite chambre (7) étanche aux fluides, caractérisé en ce que la seconde branche du raccord est adaptée pour former un joint d'étanchéité substantiellement étanche aux fluides avec la barre conductrice ou les barres conductrices (C) devant être avancées d'une façon continue à travers la seconde branche jusque dans le tube de distribution de poudre, et en ce que l'appareil comprend, en outre, au moins un élément d'espacement (51; 66) à l'extrémité aval ou près de l'extrémité aval du tube de distribution de poudre, cet élément d'espacement étant adapté pour placer la barre ou chaque barre conductrice positivement par rapport au tube métallique et comportant, ou tout au moins délimitant partiellement, un ou plusieurs passages (29; 67) à travers lesquels la poudre minérale isolante peut passer du tube de distribution de poudre au tube métallique ; au moins un orifice (27; 42, 45) de sortie de gaz qui est disposé près de l'extrémité aval du tube de distribution de poudre et qui comporte un filtre associé (43; 61) pour empêcher, ou tout au moins limiter substantiellement, l'expulsion de la poudre isolante minérale avec le gaz à travers l'orifice de sortie; et, en aval de l'orifice ou des orifices de sortie de gaz, un moyen de filtrage (28; 48, 49; 65) pour empêcher, ou tout au moins limiter substantiellement, l'écoulement de la poudre minérale isolante depuis le tube métallique vers l'arrière entre le tube de distribution de poudre et le tube métallique.

11. Appareil selon la revendication 10, caractérisé en ce que l'orifice ou chaque orifice (27; 42, 45) de sortie de gaz et son filtre associé, font partie d'un raccord (26; 61) qui est formé séparément du tube de distribution de poudre et est fixé de façon amovible à l'extrémité aval de ce tube.

12. Appareil selon la revendication 11, caractérisé en ce que le raccord (26; 61) formé séparément comprend ou constitue ledit ou lesdits éléments d'espacement (51; 66) servant à placer la barre ou chaque barre conductrice (C) par rapport au tube métallique (T).

13. Appareil selon la revendication 11 ou 12, caractérisé en ce que le raccord (26) formé séparément comprend un manchon (41) comportant, entre ses extrémités, une pluralité de trous (42) espacés circonférentiellement et, associée à chaque trou, une toile (43) en acier inoxydable ou en autre métal ou autre alliage métallique, constituant un filtre et, autour du manchon intérieur, un manchon extérieur (44) qui est formé séparément par rapport au manchon intérieur et comporte une même pluralité de trous (45) espacés circonférentiellement et qui peut être fixé de façon réglable par rapport au manchon intérieur, les trous du manchon extérieur ayant chacun une forme et une dimension telles eu égard aux formes et aux dimensions des trous du manchon intérieur que, par un ajustement approprié du manchon extérieur par rapport au manchon intérieur, on peut régler facilement la superficie de section droite de chaque trou de sortie de gaz filtré constitué par les trous se recouvrant des manchons.

14. Appareil selon la revendication 13, caractérisé en ce que le moyen de filtrage (28) du raccord (26) en aval de l'orifice ou des orifices de sortie (27) comprend une brosse (49) qui a une forme tubulaire et qui comporte une multiplicité de poils en acier inoxydable ou autre métal ou alliage métallique et qui est fixée de façon amovible de telle manière à l'extrémité aval du manchon intérieur (41) que les poils s'étendent dans le sens longitudinal entre le raccord et le tube métallique (T), les extrémités libres des poils faisant saillie au-delà de l'extrémité aval du raccord et, fixée de façon amovible au manchon intérieur immédiatement en amont de la brosse tubulaire, au moins une brosse (48) qui a une forme circulaire et qui comporte une multiplicité de poils en acier inoxydable, ou autre alliage métallique, s'étendant radialement vers l'extérieur.

15. Appareil selon la revendication 13 ou 14, caractérisé en ce que l'élément d'espacement ou chaque élément d'espacement (51) servant à placer la barre ou chaque barre conductrice (C) par rapport au tube métallique (T) comprend un axe substantiellement rigide qui s'étend diamétralement à l'intérieur du manchon intérieur (41) du raccord (28) en aval des trous (42) du manchon intérieur.

16. Appareil selon la revendication 11 ou 12, caractérisé en ce que le raccord (61) formé séparément constitue l'élément d'espacement servant à placer la barre ou chaque barre conductrice (C) positivement par rapport au tube métallique (T) et comportant, ou tout au moins délimitant partiellement, le passage ou les passages (67) à travers lesquels la poudre isolante minérale peut passer du tube (1) de distribution de poudre au tube métallique (T), cet élément d'espacement comportant une paroi continue dans le sens circonférentiel qui, sur au moins une partie de sa longueur plus près de son extrémité amont, est formé d'une matière suffisamment perméable aux fluides pour permettre l'expulsion du gaz à travers cette paroi et servant de filtre empêchant ou limitant substantiellement l'expulsion de la poudre minérale isolante avec le gaz.

17. Appareil selon la revendication 16, caractérisé en ce que la matière perméable aux fluides du raccord (61) est une matière polymère microporeuse semi-rigide ou un métal fritté.

18. Appareil selon l'une quelconque des revendications 10 à 17, dans lequel, à son extrémité amont, le tube (1) de distribution de poudre constitue une première branche (2) d'un raccord tubulaire (3) à bifurcation ou est raccordé de façon séparable à une telle première branche, ladite première branche du raccord étant raccordée de façon séparable à la chambre (7) étanche aux fluides et la seconde branche (4) du raccord étant adaptée pour former un joint substantiellement étanche aux fluides avec une barre conductrice ou des barres conductrices (C) devant être avancées de façon continue à travers la seconde branche jusque dans le tube (1) de distribution de poudre.

19. Appareil selon la revendication 18, caractérisé en ce que la seconde branche (4) du raccord tubulaire (3) à bifurcation comporte un presse-étoupe (33) destiné à former un joint d'étanchéité substantiellement étanche aux fluides avec une barre conductrice ou des barres conductrices (C) qui avancent et au moins un orifice d'entrée (39) formé dans sa paroi périphérique et à travers lequel un gaz sous une pression prédéterminée peut être injecté dans la seconde branche.

20. Appareil selon l'une quelconque des revendications précédentes, caractérisé en ce que la chambre (7) étanche aux fluides est raccordée par l'intermédiaire d'une vanne (12), pouvant être actionnée automatiquement, à une chambre supplémentaire (11) étanche aux fluides à partir de laquelle une quantité prédéterminée de poudre minérale isolante sous la pression dudit gaz peut être avancée dans la chambre étanche aux fluides lorsque la quantité de poudre dans cette chambre tombe à un niveau prédéterminé.

21. Appareil selon la revendication 20, caractérisé en ce que la chambre supplémentaire (11) étanche aux fluides est raccordée, par l'intermédiaire d'une vanne (13) pouvant être actionnée automatiquement, à une source (15) de poudre minérale isolante à partir de laquelle la chambre supplémentaire peut être rechargée automatiquement avec la poudre minérale isolante.
